# EUROPÄISCHE PATENTSCHRIFT

(11) **EP 2 191 551 B1**
(45) Veröffentlichungstag und Bekanntmachung des Hinweises auf die Patenterteilung: **03.06.2020**
(21) Anmeldenummer: 08785828.8
(22) Anmeldetag: 04.09.2008
(51) Int. Cl.: H02J 3/38

(54) **WINDPARK MIT SPANNUNGSREGELUNG DER WINDENERGIEANLAGEN UND BETRIEBSVERFAHREN**
WIND PARK WITH VOLTAGE REGULATION OF THE WIND ENERGY SYSTEMS AND OPERATING METHOD
PARC ÉOLIEN À RÉGULATION DE TENSION DES INSTALLATIONS D'ÉNERGIE ÉOLIENNE, ET PROCÉDÉ PERMETTANT DE LE FAIRE FONCTIONNER

(30) Priorität: 19.09.2007 DE 102007044601
(43) Veröffentlichungstag der Anmeldung: 02.06.2010
(73) Patentinhaber: Senvion GmbH, 22297 Hamburg (DE)
(72) Erfinder: ZEUMER, Jörg, 24768 Rendsburg (DE); LETAS, Heinz-Hermann, 23701 Süsel (DE); FORTMANN, Jens, 13156 Berlin (DE)
(74) Vertreter: Glawe, Delfs, Moll
(86) Internationale Anmeldenummer: PCT/EP2008/007246
(87) Internationale Veröffentlichungsnummer: WO 2009/036895

(56) Entgegenhaltungen:
- EP-A- 1 512 869
- DE-A1-102004 048 341
- PRODANOVIC ET AL: "High-Quality Power Generation Through Distributed Control of a Power Park Microgrid" IEEE TRANSACTIONS ON INDUSTRIAL ELECTRONICS, IEEE SERVICE CENTER, PISCATAWAY, NJ, USA, Bd. 53, Nr. 5, 1. Oktober 2006 (2006-10-01), Seiten 1471-1482, XP011149350 ISSN: 0278-0046

## Beschreibung

Die Erfindung betrifft einen Windpark mit mindestens einer Windenergieanlage, die jeweils einen Generator und einen Umrichter aufweisen, und einem Parkmaster, der zur Wirk- und Blindleistungskontrolle ausgebildet ist und ein Steuersignal für Blindleistung über ein Kommunikationsnetz an die Windenergieanlagen übermittelt, und einem Verbindungsnetz, welches die Windenergieanlagen miteinander verbindet zur Einspeisung elektrischer Energie in ein Netz über eine Verknüpfungsstelle.

Von zunehmender Bedeutung für den Betrieb von Windparks ist deren Verhalten am elektrischen Netz. Wegen der zunehmenden Anzahl und Größe der Windparks können und müssen sie ihren Beitrag zur Sicherung der Stabilität des Netzes leisten. Seitens der Netzbetreiber geht es nicht nur um die vergütete Einspeisung von Wirkleistung, sondern es werden zusätzlich auch Forderungen in Bezug auf die Einspeisung von Blindleistung erhoben, um bestimmte Toleranzgrenzen für die abgegebene Spannung einhalten zu können. Letzteres ist gerade bei Windparks, die an das Mittelspannungsnetz angeschlossen sind, von besonderer Bedeutung. Denn bei ihnen kann es wegen der vermaschten Struktur durch Veränderungen des Spannungsniveaus an einzelnen Punkten, wie dem Einspeisepunkt eines großen Windparks, zu Beeinflussungen kommen, über welche Strecken und in welche Richtung die elektrische Leistung primär fließt. Weiter ist es bekannt, dass der Einspeisung von Blindleistung eine hohe Bedeutung zur Stützung des Spannungsniveaus zukommt. Dies gilt insbesondere im Fall eines Spannungseinbruchs.

Der Fähigkeit von Windparks mit modernen, umrichterbestückten Windenergieanlagen zur Einspeisung von Wirk- wie auch Blindleistung kommt daher hohe Bedeutung zu. Es wird verlangt, dass in Bezug auf einen Verknüpfungspunkt zwischen dem Windpark und dem Netz bestimmte Sollwertvorgaben für die Blindleistung (sei es als direkte Vorgabe der Blindleistung oder des Leistungsfaktors) und häufig auch für die Sollspannung eingehalten werden. Anhand dieser Sollwertvorgaben bestimmt der Parkmaster entsprechende Steuersignale für die einzelnen Windenergieanlagen des Windparks (EP-A-1512869). Dabei ist zu berücksichtigen, dass die Windenergieanlagen eines Windparks nicht unbedingt alle identisch zu sein brauchen, und dass sie gerade in räumlich ausgedehnten Windparks häufig auch über lange Leitungen mit unterschiedlichen Kapazitäts- und Widerstandseigenschaften angeschlossen sind. Um dem dadurch bedingten Verzögerungseffekt entgegenzuwirken, ist versucht worden, an die Windenergieanlagen nicht Blindleistungssollwerte, sondern Vorgaben für die von ihnen abzugebende Spannung zu übermitteln, wobei die Windenergieanlagen diese mittels eines lokalen Spannungsreglers gemäß der Vorgabe einregeln (DE-A-102004048339). Dieses Konzept bietet den Vorteil einer schnellen Übertragung auch bei begrenzter Übertragungsgeschwindigkeit im Kommunikationsnetz. Es hat sich jedoch als nachteilig erwiesen, dass die Umsetzung insbesondere bei Windparks mit Windenergieanlagen unterschiedlicher Art bzw. von unterschiedlichen Herstellern schwierig sein kann. Dies gilt insbesondere für die Nachrüstung. Weiter ist es bekannt, den einzelnen Windenergieanlagen jeweils einen eigenen Blindleistungssollwert vorzugeben (WO-A-01/73518). Ein Nachteil dieses Konzepts liegt darin, dass bei direkter Vorgabe der Blindleistung (oder des Leistungsfaktors bzw. des Winkels) von dem Parkmaster an die einzelnen Windenergieanlagen es aufgrund der begrenzten Übertragungsgeschwindigkeit im Kommunikationsnetz des Windparks zu Verzögerungen kommen kann, die zu einem verzögerten Nachregeln und damit einem schlechten Verhalten bei schnellen Änderungen führen.

Außerdem sind aus der Publikation "High-Quality Power Generation Through Distributed Control of a Power Park Microgrid" von Milan Prodanovic et al. in IEEE Transaction on Industrial Electronics, Vol. 53, Nr. 5, Oktober 2006 ein Verfahren und eine entsprechende Vorrichtung zum Betreiben eines Windparks mit verteilter Leistungsregelung bekannt.

Der Erfindung liegt die Aufgabe zu Grunde, ausgehend von dem zuletzt genannten Stand der Technik ein verbessertes Blindleistungsmanagement bereitzustellen, das eine verbesserte Dynamik und damit höhere Stabilität im Netz erreicht.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Betreiben eines Windparks mit mindestens zwei Windenergieanlagen, die einen Generator mit einem Umrichter zur Erzeugung elektrischer Energie und eine Steuerung aufweist, einem Parkmaster, der zur Wirk- und Blindleistungskontrolle ausgebildet ist und ein Steuersignal für Blindleistung über ein Kommunikationsnetzwerk an die Windenergieanlagen übermittelt, und einem Verbindungsnetz, welches die Windenergieanlagen miteinander verbindet zur Einspeisung der erzeugten elektrischen Energie in ein Netz über eine Verknüpfungsstelle, wobei ein Regeln der Blindleistung mittels eines Blindleistungsreglers an mindestens einer der Windenergieanlagen erfolgt, an dessen Eingang ein Blindleistungssollwert angelegt ist und der auf den Umrichter zur Einstellung einer Blindleistung wirkt, ist erfindungsgemäß vorgesehen ein Anlegen eines Signals an die mindestens eine Windenergieanlage von dem Parkmaster und Regeln der abgegebenen Spannung durch Verändern der von dem Umrichter abgegebenen Blindleistung auf die Sollspannung mittels eines Zusatzreglers, und weiter ein Verknüpfen des Blindleistungsreglers und des Zusatzreglers derart, dass ein gemeinsames Steuersignal für den Umrichter gebildet wird.

Der Begriff des Wirk- oder Blindleistungsreglers ist weit zu verstehen und umfasst außer echten Leistungsregeleinrichtungen auch Stromregeleinrichtungen, die entsprechend den Wirk- bzw. Blindanteil des Stroms und damit auch der abgegebenen Leistung regeln. Es kommt für die Erfindung also nicht darauf an, ob der Strom oder die Leistung, oder beides gemischt, für die Regelung des Wirk- und Blindanteils verwendet werden.

Mit der erfindungsgemäß vorgesehenen Kombination von eigenem Blindleistungsregler an der Windenergieanlage und lokaler Spannungsregelung wird ein besseres Verhalten der Windenergieanlagen im Windpark erzielt, und zwar insbesondere in Bezug auf das dynamische Verhalten bei Änderungen. Diese Verbesserung ermöglicht eine schnellere Regelung im Windpark sowie eine Vermeidung von Schwingungen, wie sie herkömmlicherweise bei Windparks mit Windenergieanlagen verschiedenen Typs leicht entstehen konnten. Dabei kann das Verhalten durch Wahl der Art der Verknüpfung von Blindleistungsregelung und Zusatzregelung auf einfache Weise (in der Regel durch einfache Softwareänderung) beeinflusst werden. Das erfindungsgemäße Zusammenwirken des Blindleistungsreglers und des Zusatzreglers durch die Verknüpfung erreicht damit eine hohe Dynamik, d.h. eine schnelle Reaktion bei Spannungsänderungen, und eine gute Stabilität, d.h. eine stationäre Genauigkeit ohne Gefahr von Regelschwingungen. Zur feineren Abstimmung kann vorgesehen sein, dass bei der Verknüpfung die Blindleistungsregelung dominierenden Einfluss hat. Damit wird der dämpfende Einfluss auf Regelschwingungen zwischen den Windenergieanlagen verstärkt, so dass diese praktisch verschwinden. Dominiert hingegen die Zusatzregelung der Spannung bei der Verknüpfung, so kann ein schnelleres Ansprechen im Fall von Spannungsänderungen erreicht werden.

Das erfindungsgemäße Zusammenwirken sei nachfolgend am Beispiel eines Spannungsrückgangs erläutert. Die Spannungsreduktion im Netz wird nahezu zeitgleich von dem Parkmaster und der Steuerung der einzelnen Windenergieanlagen erkannt. Der Parkmaster berechnet mittels seiner Blindleistungskontrolleinheit einen neuen Blindleistungssollwert auf Basis des geänderten Spannungswerts. Aufgrund der wegen begrenzter Bandbreite unvermeidlich auftretenden Signalverzögerung bei der Übermittlung des geänderten Sollwerts an die Windenergieanlagen (dieser Wert beträgt in der Praxis einige 100 Millisekunden) kommen die geänderten Sollwerte bei dem Blindleistungsregler der Windenergieanlagen mit beträchtlicher Verzögerung an. Da der Zusatzregler an der Windenergieanlage den Spannungsrückgang ebenfalls erkennt, braucht die verzögerte Übermittlung neuer Sollwerte nicht abgewartet zu werden, sondern die erforderliche Veränderung der Blindleistungsabgabe kann schon vorweggenommen werden. Treffen die neuen Sollwerte vom Parkmaster ein, wird dank der erfindungsgemäßen Verknüpfung mit dem Blindleistungsregler dafür gesorgt, dass eine ausreichende stationäre Genauigkeit erreicht wird. Dabei passt die im Parkmaster implementierte Blindleistungskontrolleinheit die Sollvorgaben für die Windenergieanlagen so an, dass die aktuell von dem Park insgesamt gelieferte Blindleistung mit der Sollvorgabe übereinstimmt. Dieser Vorgang kann langsam und damit mit hoher stationärer Genauigkeit durchgeführt werden, da die Windenergieanlagen mit dem Verknüpfen von Zusatzregler und Blindleistungsregler die erforderliche Reaktion autark vorwegnehmen können.

Das erfindungsgemäße Verfahren ermöglicht außer der schnellen Ausregelung von Regeldifferenzen bei gleichzeitiger Vermeidung von Regelschwingungen eine flexible Anpassung an die Anforderungen unterschiedlicher Netzbetreiber. So kann das Verfahren leicht so implementiert werden, dass anstatt einer vorgegebenen Blindleistung für den Windpark als Ganzes eine Sollspannung für den Windpark als Ganzes der Regelung zu Grunde gelegt wird. Weiter bietet das erfindungsgemäße Verfahren den Vorteil, dass es mit vergleichsweise geringen Änderungen in softwarebasierte Steuerungen bzw. Parkmaster implementiert werden kann. Zusätzlicher Hardwareaufwand ist nur in geringem Umfang erforderlich.

Das Verknüpfen der Signale des Blindleistungsreglers und des Zusatzreglers kann mittels veränderbaren Wichtungsfaktoren erfolgen. Damit kann das Zusammenspiel des Zusatzreglers und des Blindleistungsregler beeinflusst werden. Es sind verschiedene Betriebsverfahren möglich. So kann vorgesehen sein, dass das Signal für die Sollspannung für den Zusatzregler wie auch des Blindleistungssollwerts für den Blindleistungsregler beide durch den Parkmaster vorgegeben sind. Dies ermöglicht eine sehr flexible Optimierung des Verhaltens der Windenergieanlagen im Windpark und damit des Windparks gegenüber dem Netz insgesamt. Es kann aber zur Vereinfachung auch vorgesehen sein, jeweils eine der beiden Sollgrößen an der Windenergieanlage einzustellen, und die jeweils andere durch den Parkmaster dynamisch vorzugeben. Ist beispielsweise vorgesehen, dass der Blindleistungssollwert konstant ist, gibt der Parkmaster das Signal für die Sollspannung an den Zusatzregler der Windenergieanlage. Dies ermöglicht eine sehr schnelle Spannungsregelung und erreicht damit eine effektive Stabilisierung der Netzspannung. Weiter kann damit unerwünschten Spannungsüberhöhungen einzelner Windenergieanlagen vorgebeugt werden. Insgesamt können damit die Verluste im Windpark optimiert werden. Die Vorgabe einer festen Blindleistung braucht dabei nicht an allen Windenergieanlagen zu erfolgen, sondern zweckmäßigerweise nur an einem Teil der Windenergieanlagen des Parks. Alternativ kann aber auch vorgesehen sein, dass die Sollspannung an den Windenergieanlagen fest eingestellt ist, während der Blindleistungssollwert durch den Parkmaster dynamisch vorgegeben wird. Dies ermöglicht noch ein hinreichend schnelles Reagieren auf Spannungsänderungen, und zwar insbesondere auch in Kombination mit Windenergieanlagen im Windpark, die nicht über eine lokale Spannungsregelung verfügen. Dieses erfindungsgemäße Verfahren kann damit sehr flexibel auf verschiedene Weise ausgeführt werden. Es ist zudem robust gegenüber Windparks mit Windenergieanlagen unterschiedlicher Bauart, welche bestimmte Funktionalitäten, wie die Spannungsregelung, nicht aufweisen oder über andere zusätzliche Funktionalitäten, wie eine zusätzliche passive Kompensation, verfügen. Das erfindungsgemäße Verfahren kann daher auch mit Erfolg bei solchen Windparks eingesetzt werden, die Windenergieanlagen umfassen, bei denen weder Sollspannung noch Blindleistung vorgebbar sind. Das erfindungsgemäße Verfahren eignet sich damit auch für Windparks, die aufgrund eines sehr ausgedehnten Verbindungsnetzes oder Schwierigkeiten im Kommunikationsnetz einzelne Anlagen nicht in die Regelung einbeziehen können.

Bei einer bewährten Ausführungsform erfolgt die Verknüpfung in der Weise, dass die Blindleistung der Windenergieanlage linear mit der Spannung geändert wird, solange die Spannung in einem Spannungstoleranzband liegt. Vorzugsweise ist weiter vorgesehen, dass die Blindleistung außerhalb der Grenzen des Toleranzbands nichtlinear verändert wird, beispielsweise mittels eines Knicks in einer Kennlinie an den Grenzen des Toleranzbands. Damit kann innerhalb bzw. außerhalb des Toleranzbands das Verhalten des erfindungsgemäßen Verfahrens zwischen Blindleistungsvorgabe einerseits und Spannungsregelung andererseits variiert werden.

Die Verknüpfung ist dabei maßgeblich durch den Zusatzregler beeinflusst und die Blindleistung der Windenergieanlage wird entsprechend den Eigenschaften des Zusatzreglers einer Spannungsänderung folgen. Dabei kann der Zusatzregler nicht nur ein Proportionalregler sein, sondern auch integrale und/oder differentiale Anteile aufweisen.

Das Verknüpfen kann mit Vorteil durch Vorfiltern der Eingangsgröße für den Blindleistungsregler oder den Zusatzregler erfolgen. Insbesondere kann vorgesehen sein, dass der Zusatzregler dem Blindleistungsregler vorgeschaltet ist, so dass ein Ausgangssignal des Spannungsreglers als eines der Eingangssignale an dem Blindleistungsregler angelegt ist. Damit kann eine übersichtliche Struktur der Regler erreicht werden. Diese Struktur ermöglicht ein nichtlineares Vorfiltern, beispielsweise durch ein Kennlinienglied als Vorfilter.

Um die Spannungsstabilität des Windparks insgesamt zu erhöhen, kann die vom Windpark abgegebene Spannung auf einen Sollwert geregelt werden mittels eines auf die Blindleistungskontrolleinheit des Parkmasters einwirkenden Spannungssteuermoduls. An dieses ist ein Sollwert für die Sollspannung des Parks als Eingang angelegt, und dessen Ausgangssignal ist als Eingangssignal an der Blindleistungskontrolleinheit angelegt. Damit wird die Möglichkeit geschaffen, anstelle von Blindleistungssollwerten einen (vom Netzbetreiber vorgegebenen) Spannungssollwert für den Betrieb des Windparks zu Grunde zu legen. Als Spannungssteuermodul kann mit Vorteil eine Spannungsstatik verwendet werden, die im einfachsten Fall als ein Kennlinienglied ausgeführt sein kann. Vorzugsweise ist weiter vorgesehen ein Erzeugen eines Vorsteuersignals für die Sollspannung in Abhängigkeit von der tatsächlichen Spannung am Windpark zur Kompensation der durch die Zusatzregler der Windenergieanlagen bewirkten Spannungsänderungen. Damit kann die Gefahr von Überschwingern bei der Änderung der Netzspannung unter dem Einfluss der lokalen Spannungsregelung der Windenergieanlage im Parkmaster durch Vorsteuerung weitgehend kompensiert werden. Der zugrunde liegende Gedanke besteht darin, dass die an die Windenergieanlagen übermittelten Blindleistungssollwerte schon um den zu erwartenden Beitrag der lokalen Spannungsregulation korrigiert sind. Die Dynamik bei Spannungsänderung, insbesondere Spannungseinbrüchen, verbessert sich damit beträchtlich.

Vorzugsweise wird in der Steuerung der Windenergieanlage eine Notsteuerung verwendet, die dazu ausgebildet ist, bei Ausbleiben eines Signals für den Blindleistungssollwert einen vorzugsweise eingespeicherten Ersatzwert für den Blindleistungsregler bereitzustellen. Damit kann auch bei Ausfall der Kommunikation, beispielsweise durch eine Störung des Kommunikationsnetzes, eine gewisse Blindleistungsregelung der Windenergieanlage aufrechterhalten werden, und zwar auf einen vorher hinterlegten Standardwert.

Die Erfindung bezieht sich ferner auf einen Windpark mit mindestens zwei Windenergieanlagen, die einen Generator mit einem Umrichter zur Erzeugung elektrischer Energie und eine Steuerung aufweisen, einem Parkmaster, der zur Wirk- und Blindleistungskontrolle ausgebildet ist und ein Steuersignal für Blindleistung über ein Kommunikationsnetzwerk an die Windenergieanlagen übermittelt, und einem Verbindungsnetz, welches die Windenergieanlagen miteinander verbindet zur Einspeisung der erzeugten elektrischen Energie in ein Netz über eine Verknüpfungsstelle, wobei mindestens eine der Windenergieanlagen einen Blindleistungsregler aufweist, an dessen Eingang ein Blindleistungssollwert angelegt ist und der auf den Umrichter zur Einstellung einer dem Blindleistungssollwert entsprechenden Blindleistung einwirkt, wobei erfindungsgemäß die Windenergieanlage einen Zusatzregler aufweist, an dessen Eingang vom Parkmaster ein Signal für eine Sollspannung angelegt ist und der Steuersignale für den Umrichter zum Verändern der abgegebenen Blindleistung derart ausgibt, um die abgegebene Spannung der Windenergieanlage auf den Sollwert zu regeln, und wobei eine Verknüpfungseinheit vorgesehen ist, welches den Blindleistungsregler und den Zusatzregler derart miteinander verbindet, dass ein gemeinsames Steuersignal für den Umrichter gebildet ist.

Zur näheren Erläuterung wird auf vorstehende Ausführungen zum Verfahren verwiesen.

Die Erfindung wird nachfolgend unter Bezugnahme auf die beigefügte Zeichnung näher erläutert, in der vorteilhafte Ausführungsbeispiele dargestellt sind. Es zeigen:
- Fig. 1: eine schematische Ansicht eines Ausführungsbeispiel eines erfindungsgemäßen Windparks mit Parkmaster und Windenergieanlagen;
- Fig. 2: ein Beispiel für eine Anforderung in Bezug auf das Verhalten des Windparks am Netz;
- Fig. 3: eine schematische Darstellung eines Parkmasters gemäß einem ersten Ausführungsbeispiels der Erfindung;
- Fig. 4: eine schematische Darstellung einer Windenergieanlage gemäß einem ersten Ausführungsbeispiel der Erfindung;
- Fig. 5: Darstellungen von alternativen Kennlinien für das Ausführungsbeispiel gemäß Fig. 4.;
- Fig. 6: eine schematische Darstellung eines Parkmasters gemäß einem zweiten Ausführungsbeispiel der Erfindung; und
- Fig. 7: eine schematische Darstellung für eine Windenergieanlage gemäß einem zweiten Ausführungsbeispiel der Erfindung.

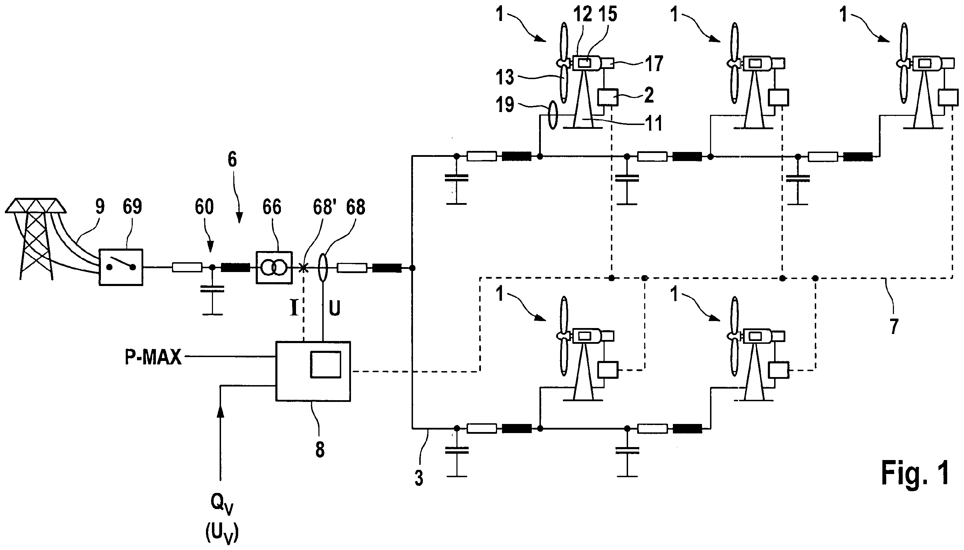

Gemäß einer Ausführungsform der Erfindung umfasst ein Windpark eine Mehrzahl von Windenergieanlagen 1 (in Fig. 1 sind beispielhaft fünf Windenergieanlagen dargestellt), ein Verbindungsnetz 3, an das die Windenergieanlagen 1 angeschlossen sind und das über einen Verknüpfungspunkt 69 mit einem Mittelspannungsnetz 9 verbunden ist, einen Parkmaster 8 zur zentralen Steuerung des Windparks und ein Kommunikationsnetz 7, welches den Parkmaster 8 mit den einzelnen Windenergieanlagen 1 verbindet.

Die einzelnen Windenergieanlagen 1 umfassen einen Turm 11, an dessen oberen Ende ein Maschinenhaus 12 in Azimutrichtung verdrehbar angeordnet ist. An dessen vorderer Stirnseite ist ein Rotor 13 drehbar an einer Rotorwelle (nicht dargestellt) befestigt, über welche der Rotor 13 einen Generator 15 in dem Maschinenhaus 12 antreibt. Es handelt sich vorzugsweise um einen doppelt gespeisten Asynchrongenerator, jedoch sind auch andere Bauarten möglich. Mit dem Generator 15 ist ein Umrichter 17 verbunden. Er wandelt die von dem Generator gelieferte elektrische Leistung variabler Frequenz in einen dreiphasigen Drehstrom mit fester Frequenz (Netzfrequenz) um. Die Windenergieanlage 1 wird von einer Steuerung 2 kontrolliert. Sie wirkt über geeignete (nicht dargestellte) Steuerleitungen auf die einzelnen Komponenten der Windenergieanlage 1 ein. An die Steuerung 2 ist das Kommunikationsnetz 7 angeschlossen.

Zur Kontrolle über die in das Netz 9 eingespeiste elektrische Leistung ist der Parkmaster 8 vorgesehen. Er übt eine Leitfunktion für die Windenergieanlagen 1 aus. Die von den Windenergieanlagen 1 erzeugte elektrische Leistung wird in das Verteilnetz 3 eingespeist und über dieses zu einer Verbindungsleitung 6 geführt, über welche sie zur Verknüpfungsstelle 69 und weiter in das Netz 9 geleitet wird. Die Verbindungsleitung 6 kann eine beträchtliche Länge und damit nicht zu vernachlässigende Widerstände, Induktivitäten und Kapazitäten aufweisen. Diese sind entlang der Verbindungsleitung 6 in Fig. 1 symbolhaft als konzentrierte Elemente 60 dargestellt. Die Verbindungsleitung 6 umfasst einen Mittelspannungstransformator 66, der dazu ausgebildet ist, dass im Verteilnetz 3 herrschende Spannungsniveau von etwa 1000 Volt auf das Spannungsniveau des Mittelspannungsnetzes 9 von etwa 20 kV anzuheben. Weiter sind entlang der Verbindungsleitung 6 Aufnehmer für Spannung und Strom 68, 68' angeordnet, deren Messsignale an den Parkmaster 8 angeschlossen sind.

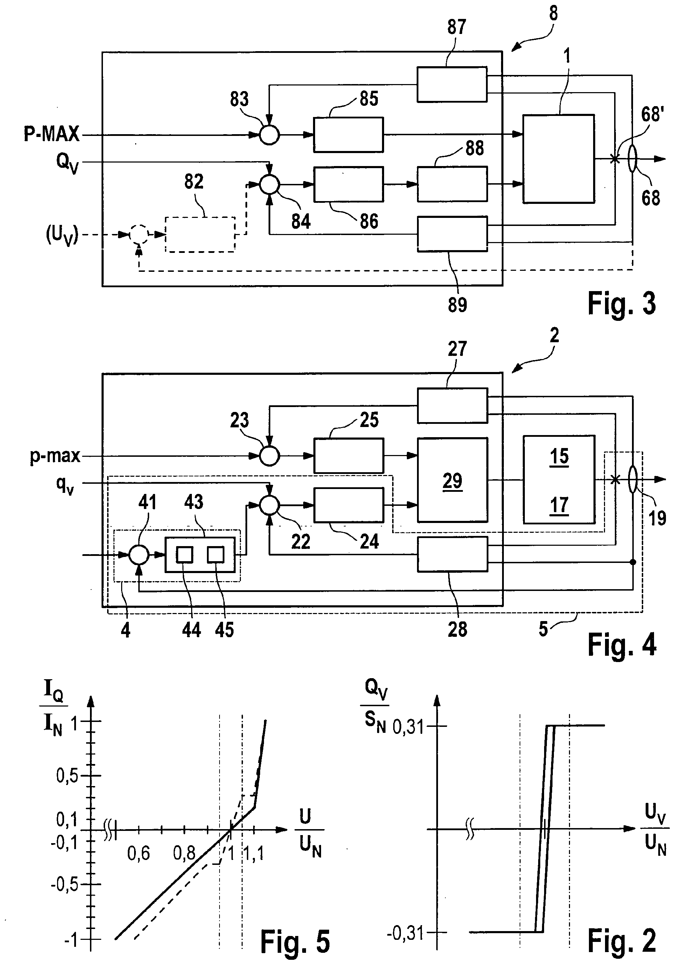

Der Parkmaster 8 weist außer Eingängen für die bereits genannten Messsignale für Spannung und Strom die von dem Windpark in das Netz 9 einspeisten Leistung Eingänge für eine maximal einzuspeisende Wirkleistung P-MAX sowie für eine Blindleistungsvorgabe der einzuspeisenden Leistung auf. Der Begriff "Blindleistungsvorgabe" ist allgemein zu verstehen und umfasst außer einem Blindleistungswert Qv den Leistungsfaktor cos ϕ, den tan ϕ, den Winkel ϕ selbst oder auch eine Vorgabespannung Uv. Der Parkmaster 8 umfasst einen Wirkleistungszweig mit einem Differenzglied 83 und einer Wirkleistungskontrolleinheit 85 (Fig. 3). An einen positiven Eingang des Differenzglieds 83 ist das von außen zugeführte Eingangssignal für eine maximale Wirkleistung angelegt. An den anderen, negativen Eingang des Differenzglieds 83 ist ein Ausgangssignal einer Wirkleistungsberechnungseinheit 87 angelegt, an die als Eingangssignale die von den Strom- und Spannungsaufnehmern 68, 68' ermittelten Messsignale angeschlossen sind. Die Wirkleistungsberechnungseinheit 87 bestimmt die von dem Windpark tatsächlich abgegebene Wirkleistung, und diese wird von dem Differenzglied 83 mit der vorgesehenen Maximalleistung P-Max verglichen, und die sich daraus ergebene Differenz an die Wirkleistungskontrolleinheit 85 als Eingangssignal angelegt. In der Wirkleistungskontrolleinheit 85 ist eine Begrenzungsfunktion implementiert welche im Fall eines Überschreitens der vorgesehenen Maximalleistung durch die tatsächlich abgegebene Wirkleistung ein Wirkleistungsbegrenzungssignal Pₘₐₓ an die Windenergieanlagen 1 des Windparks ausgibt.

Der Parkmaster 8 weist ferner einen Blindleistungszweig mit einem Differenzglied 84 und einer Blindleistungskontrolleinheit 88 auf. An einem ersten, positiven Eingang des Differenzglieds 84 ist ein von extern kommendes Sollsignal für die Blindleistungsvorgabe Qv angelegt. An dem negativen Eingang des Differenzglieds 84 ist eine Blindleistungsberechnungseinheit 89 angeschlossen, welche aus den von den Messaufnehmern 68, 68' ermittelten Messsignalen für Spannung und Strom den Wert der tatsächlich von dem Windpark abgegebenen Blindleistung Q berechnet. Das Differenzglied 84 bestimmt die Differenz aus der tatsächlich eingespeisten Blindleistung und dem angelegten Vorgabewert, und führt die Differenz nach Begrenzung durch ein Begrenzungsmodul 86 der Blindleistungskontrolleinheit 88 zu. Diese ist dazu ausgebildet, aus der Abweichung der abgegebenen Blindleistung von dem vorgesehenen Sollwert jeweils aktualisierte Steuersignale für die einzelnen Windenergieanlagen 1 des Windparks, genauer gesagt für deren Steuerungen 2 zu erzeugen. Mittels dieser Steuersignale wird der Sollbetriebspunkt der Windenergieanlagen 1 derart geändert, dass Abweichungen der von dem Windpark abgegebenen Blindleistung von dem Vorgabewert ausgeregelt werden. Es sei angemerkt, dass die unmittelbare Vorgabe der Sollblindleistung Qv nur eine von mehreren Möglichkeiten für die Regelung der Blindleistung ist. Die Vorgabe einer Sollspannung ist in Fig. 2 beispielhaft dargestellt. Das Umrechnungsmodul 82 ist als ein Spannungsstatikmodul ausgebildet, in welchem eine Kennlinienfunktion zur Bestimmung einer Blindleistungsvorgabe Qv in Abhängigkeit von der vorgegebenen Spannung einspeichert ist. Die Abspeicherung erfolgt vorzugsweise in Gestalt einer Look-up-table.

Aufbau und Funktionsweise der Steuerung 2 einer Windenergieanlage 1 seien anhand des in Fig. 4 dargestellten Ausführungsbeispiels erläutert. Die Steuerung 2 umfasst als Hauptkomponente einen Wirkleistungsregler 25 und einen Blindleistungsregler 24. An den Eingang des Wirkleistungsreglers 25 ist ein Differenzglied 23 angeschlossen. An dessen positiven Eingang ist angelegt das von dem Parkmaster ermittelte Maximalmaß P-MAX für die Wirkleistung der jeweiligen Windenergieanlage, und an den negativen Eingang ist angelegt ein Maß für die von einer Berechnungseinheit 27 ermittelten tatsächlich abgegebene Wirkleistung der Windenergieanlage 1. Diese bestimmt (in einer der Berechnungseinheit 87 des Parkmasters entsprechenden Weise) die tatsächlich abgegebene Wirkleistung anhand von Messsignalen, die von (nicht dargestellten) Sensoren für Spannung und Strom an der Anschlussleitung der Windenergieanlage 1 an das Verbindungsnetz 3 gemessen sind. Aus der Differenz bestimmt das Differenzglied 23 eine Abweichung, die als Eingangssignal für den Wirkleistungsregler 25 dient. Der Wirkleistungsregler 25 bestimmt mittels eines an sich bekannten Regelalgorithmus ein Steuersignal für die Windenergieanlage, dass einem Entkopplungs- und Begrenzungsmodul 29 zugeführt wird.

Der Blindleistungsregler 24 weist eine ähnliche Struktur wie der Wirkleistungsregler 25 auf. An seinem Eingang ist ein Differenzglied 22 angeschlossen. Dieses bildet eine Differenz aus angelegten Signalen für eine von der Blindleistungskontrolleinheit 88 des Parkmasters 8 bestimmte Sollblindleistung qs und einer mittels einer Blindleistungsberechnungseinheit 28 berechneten tatsächlich abgegebenen Blindleistung der Windenergieanlage. Die Differenz daraus bildet eine Blindleistungsabweichung, welche als Eingangssignal an den Blindleistungsregler 24 angelegt ist. Diese bestimmt daraus mittels eines an sich bekannten Regelalgorithmus ein Steuersignal für die Windenergieanlage 1, die ebenfalls an das Entkopplung- und Begrenzungsmodul 29 angelegt ist. Dieses ist dazu ausgebildet, aus den Steuersignalen des Wirkleistungsreglers 25 und des Blindleistungsreglers 24 gemeinsame Führungssignale für den Umrichter 17 der Windenergieanlage 1 zu generieren. Diese Signale werden als Führungsvektor F an den Umrichter 17 und ggf. auch den Generator 15 der Windenergieanlage angelegt.

Die erfindungsgemäße ausgebildete Steuerung 2 umfasst weiter einen Zusatzregler 4. Dieser umfasst ein Differenzglied 41 an seinem Eingang und einen Regelkern 43. An einen positiven Eingang des Differenzglieds 41 ist ein Maß für einen Sollwert der von der Windenergieanlage 1 abgegebenen Spannung angelegt; an dem anderen, negativem Eingang des Differenzglied 41 ist das Maß für die von der Spannungsmesseinrichtung 19 bestimmte tatsächlich abgegebene Spannung angelegt. Die sich dabei ergebene Spannungsdifferenz wird als Eingangssignal an den Regelkern 43 des Zusatzreglers 4 angelegt. Dieser ist dazu ausgebildet, anhand der Spannungsabweichung Korrektursignale für den Eingang des Blindleistungsreglers 24 zu bestimmen. In dem dargestellten Ausführungsbeispiel weist der Regelkern 43 dazu ein schaltbares Kennlinienglied 44, das eine Schar von (im dargestellten Beispiel zwei) verschiedenen Kennlinien implementiert hat, sowie ein Multiplizierglied 45 auf. Die Auswahl zwischen den Kennlinien kann nach Vorgabe von außen, durch den Parkmaster 8 oder ggf. auch selbsttätig durch die Steuerung 2 der Windenergieanlage 1 bewirkt werden.

Es wird Bezug genommen auf Fig. 5, in der die Schar von zwei Kennlinien abgebildet ist. Zuerst sei die mittels einer durchgezogenen Linie dargestellte Kennlinie erläutert. Sie ist gegliedert in mehrere Abschnitte: einen unteren Ast für eine Spannungsabweichung von mehr als 10% von der Nennspannung, einen oberen Ast für eine Abweichung von mehr +10% von der Nennspannung sowie einen Hauptbereich in dem Spannungsband dazwischen. Die Kennliniensteigung in dem Hauptbereich ist so gewählt, das bei einer Spannungsabweichung von +10% oder -10% sich ein Korrekturwert für den einzuspeisenden Blindstrom von +16% bzw. -16% des Nennstroms ergibt. In dem unteren Ast ist eine etwas höhere Steigung der Kennlinie gewählt, bei der sich der Sollwert für den Blindstrom um etwa 20% des Nennwerts je 10% weiterer Spannungsabweichung ändert. Hingegen ist im oberen Ast der Kennlinie zum Schutz vor Überspannung eine sehr hohe Steigung der Kennlinie implementiert, so dass bereits bei einer Spannungsabweichung von +15% der maximal mögliche Blindstrom (also der Nennstrom) ausgegeben wird. Aus dem so ermittelten Blindstrom wird durch Multiplikation mit der Spannung in dem Multiplikationsglied 45 ein Sollwert für die Blindleistung berechnet. Mit einer solchen Kennlinie kann eine gute Regelgeschwindigkeit erreicht werden, die sich insbesondere dazu eignet, das Verhalten des Windparks im Ganzen bezüglich der Blindleistungsvorgabe bei Spannungsänderungen zu verbessern. Insbesondere eignen sich diese Kennlinien zur Dämpfung von Regelschwingungen zwischen den Windenergieanlagen bei einem Windpark mit Blindleistungsvorgabe an die einzelnen Windenergieanlagen.

Eine alternative Kennlinie ist gestrichelt in Fig. 5 dargestellt. Sie ist in fünf Segmente gegliedert: einem unteren Ast, einem unteren Plateau, einem Hauptbereich, einem oberen Plateau und einem oberen Ast. Der Hauptbereich erstreckt sich über einen schmaleren Bereich als in dem Fall der zuerst erläuterten Kennlinie, nämlich in einem Bereich von -5% bis +5% der Sollspannung. Die Steigung der linearen Kennlinie ist deutlich größer als bei der ersten Variante, so ist bei einer Abweichung von bereits 5% eine Änderung des Blindstroms in Höhe von 30% vorgesehen. Dieser Wert von 30% für den Blindstrom wird auch gehalten in dem anschließenden Plateaubereich der Kennlinie, der sich von 5% bis 10% Abweichung sowohl im Fall der Unterspannung wie auch im Fall der Überspannung erstreckt. Daran schließt sich für niedrigere Spannung der untere Ast der Kennlinie an, der eine Steigung entsprechend der ersten Variante aufweist, also etwa 20% Änderung des Blindstroms für je 10% Spannungsabweichung. Der obere Ast weist wiederum eine deutlich größere Steigung auf, so dass ausgehend von einem Blindstrom von 30% für eine Überspannung von 10% bereits der maximale Blindstrom (Nennstrom) bei einer Überspannung von +15% erreicht wird. Bei dieser Kennlinie dominiert das Element der Spannungsregelung. Dieses ist dann von Vorteil, wenn in dem Windpark eine besonders schnelle Spannungsregelung erwünscht ist, um negative Auswirkungen von Spannungsänderungen sicher auszuschließen.

Gemäß einem weiteren Aspekt der Erfindung kann die Steigung der Kennlinie in dem Hauptbereich so gewählt sein, dass sie der Kennliniensteigung der in dem Parkmaster 8 implementierten Blindleistungsstatik entspricht. Damit wird erreicht, dass im Fall von Spannungsänderungen die einzelnen Windenergieanlagen mittels des Zusatzreglers 4 autark schnell durch Blindleistungseinspeisung auf die Spannungsänderung reagieren können, während gleichzeitig im Rahmen der größeren, vor allem durch die Kommunikationszeit über das Kommunikationsnetz 7 verlängerten Reaktionszeit des Parkmasters 8 mittels dessen Spannungsstatik korrigierte Sollwerte für die einzelnen Windenergieanlagen berechnet werden, so dass für die lokalen Zusatzregler 4 der Windenergieanlagen 1 wieder auf ihren Ausgangswert zurück geführt werden. Gegebenenfalls sind dafür mehrere Iterationszyklen des Parkmasters 8 erforderlich, bis eine stationäre Genauigkeit erreicht ist. Dies ist jedoch nicht störend, da dank des an den Windenergieanlagen 1 vorgesehenen Zusatzreglers 4 eine schnelle Reaktion und damit eine gute Dynamik insgesamt gesichert ist.

Dank einer solchen Verknüpfung der Statik des Parkmasters 8 mit dem Zusatzregler 4 erreicht die Erfindung damit eine deutliche Verbesserung des Verhaltens des Windparks in Bezug auf Blindleistung bei Spannungsänderungen innerhalb und außerhalb des vorgesehenen Toleranzbands.

Der Zusatzregler 4 und der Blindleistungsregler 24 sind durch Hintereinanderschaltung miteinander verknüpft. Dabei fungiert der Zusatzregler 4 als ein Vorfilter für den Blindleistungsregler 24, der aus seiner eigenen Führungsgröße (Blindleistungssollwert) und dem Stellsignal des Zusatzreglers 4 ein gemeinsames Ausgangssignal berechnet, das mit dem Führungsfaktor an die Windenergieanlagen 1 übermittelt wird. Es wird also von der Struktur mit Zusatzregler 4, Differenzglied 22, Blindleistungsregler 24 und Rückführung über Spannungsaufnehmer 19 und Differenzglied 41 eine Verknüpfungseinheit 5 gebildet.

Die Windenergienanlagen 1 können hierbei auf verschiedene Weisen betrieben werden. So kann in einer ersten Betriebsart, wie vorstehend beschrieben, vorgesehen sein, dass sowohl die Sollblindleistung wie auch die Spannung der einzelnen Windenergieanlagen 1 durch den Parkmaster 8 vorgegeben ist. Dies ist die Betriebsart mit voller Verknüpfung. Sie ermöglicht eine sehr flexible Optimierung des Verhaltens der Windenergieanlagen 1 im Windpark sowie in der Konsequenz eine Optimierung des Verhaltens des Windparks insgesamt gegenüber dem Netz 9. Weiter eröffnet die Vorgabe einer Sollblindleistung an die einzelnen Windenergieanlagen 1 die Möglichkeit, dass ggf. dort vorhandene passive Kompensationseinrichtungen mit in die Regelung eingebunden werden können. - Zur Vereinfachung können aber auch andere Betriebsverhalten mit eingeschränkter Verknüpfung vorgesehen sein. So kann in einer zweiten Betriebsweise die Vorgabe der Sollspannung weiterhin durch den Parkmaster 8 erfolgen, während an den Windenergieanlagen eine konstante Sollblindleistung eingestellt ist. Diese Betriebsweise bietet den Vorteil einer sehr schnellen Spannungsregelung, um so die abgegebene Spannung und damit letztlich auch die insgesamt vom Windpark an das Netz 9 abgegebene Spannung zu stabilisieren. Weiter ermöglicht dies eine Optimierung der Verluste im Windpark und die Vermeidung von unerwünschten Spannungsüberhöhungen an einzelnen Windenergieanlagen 1, insbesondere solchen, die im Verbindungsnetz 3 am Ende langer Anschlussleitungen liegen. Zweckmäßiger Weise ist in einem Windpark mit mehreren Windenergieanlagen vorgesehen, dass nur einige der Windenergieanlagen einen konstanten Blindleistungssollwert vorgegeben haben. - Eine alternative dritte Betriebsweise besteht darin, dass die abgegebene Sollblindleistung durch den Parkmaster 8 vorgegeben wird, während der Sollwert für die abgegebene Spannung konstant ist. Eine solche Betriebsweise kann zweckmäßig sein in Windparks, die auch Windenergieanlagen ohne lokale Spannungsregelung aufweisen. Diese Betriebsweise bietet sich somit insbesondere für die Nachrüstung an. - Schließlich ist noch eine vierte Betriebsweise möglich, bei der sowohl die Sollspannung wie auch die Blindleistung auf feste Sollwerte gelegt werden. Damit können auch Windenergieanlagen 1 eingebunden werden, die an sehr ungünstig gelegenen Stellen liegen (lange Anschlussleitungen bzw. schwierige Verbindung über das Kommunikationsnetzwerk 7). Die Erfindung bietet also die Flexibilität, auch bei sehr problematischen Windenergieanlagen eine gute Einbindung in das Gesamtregelkonzept des Windparks zu erreichen. Vorzugsweise ist die Steuerung 2 in einem solchen Fall derart auszubilden, dass entweder die vorgegebene Blindleistung oder die vorgegebene Sollspannung Priorität haben. Im ersten genannten Fall ist es zweckmäßig, eine langsame Regelung in der Steuerung 2 zu implementieren, die den Blindleistungssollwert intern langsam derart nachregelt, dass bei Spannungsänderungen die Zusatzregler wieder in seinen Ausgangswert zurück geführt ist.

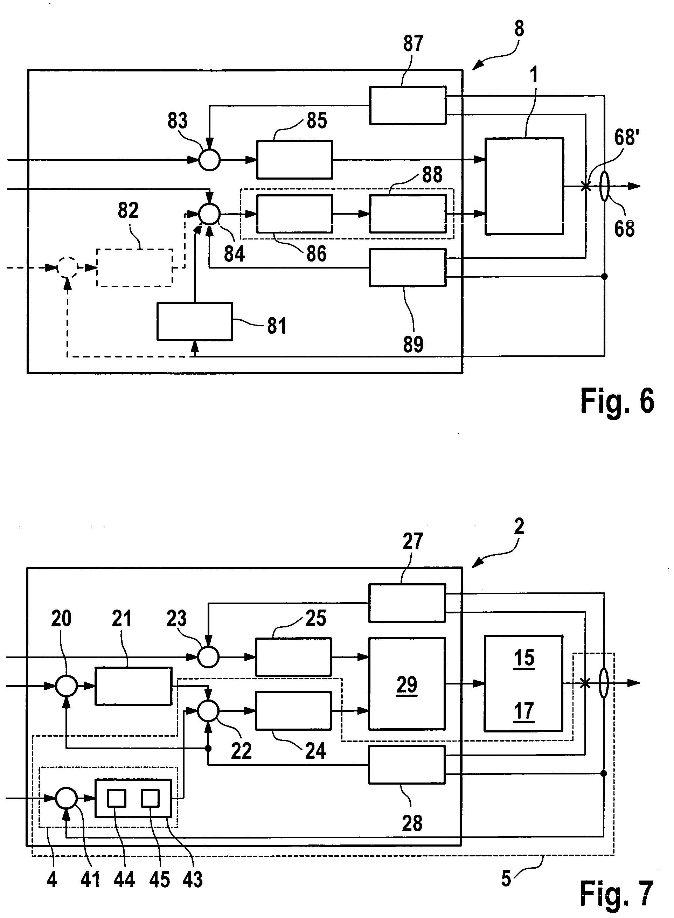

Eine zweite Ausführungsform des Parkmasters ist in Fig. 6 dargestellt. Sie unterscheidet sich von der in Fig. 2 dargestellten ersten Ausführungsform im Wesentlichen dadurch, dass ein zusätzliches Kompensationsmodul 80 für die Spannung vorgesehen ist. An einem Eingang des Kompensationsmoduls 80 ist ein Messwert für die mittels des Spannungsaufnehmers 68 ermittelte Spannung der von dem Windpark in das Netz 9 abgegebenen elektrischen Leistung angelegt. Ein Ausgangssignal des Kompensationsmoduls 80 ist als ein weiterer negativer Eingang an das Differenzglied 84 des Parkmasters 8 angelegt. Das Kompensationsmodul 80 weist eine D-Charakteristik auf. Es ist dazu ausgebildet, als Vorsteuerung bei Änderungen der Spannung einen Kompensationswert zu bestimmen, der etwa dem Einfluss der Spannungsstatik des Parkmasters 8 entspricht. Damit kann der an die einzelnen Windenergieanlagen 1 übermittelte Wert für die Sollblindleistung schon um den Beitrag des lokalen Zusatzreglers 4 korrigiert werden. Damit wird der Gefahr von Überschwingern bei plötzlichen Spannungsänderungen deutlich entgegengewirkt.

Bei dem in Fig. 7 dargestellten zweiten Ausführungsbeispiel der Windenergieanlage ist in der Steuerung 2 ein Notsteuermodul 21 vorgesehen. Es ist dazu ausgebildet, bei Ausbleiben eines Signals für die Sollblindleistung einen Ersatzwert bereit zu stellen. Dazu wirkt das Notsteuermodul 21 mit seinem Ausgang auf das Differenzglied 22 ein. Um mit dem Notsteuermodul 21 eine Regelung zu ermöglichen, ist ihm ein Differenzglied 20 vorgeschaltet, dass eine Differenz aus der vom Parkmaster 8 ermittelten Sollblindleistung und der tatsächlich eingespeisten Sollblindleistung ermittelt, und diese an das Notsteuermodul als Eingangssignal anlegt. Somit kann auch bei Ausfall des Kommunikationsnetzes 7 eine Blindleistungsregelung an der Windenergieanlage 1 durchgeführt werden. Geregelt wird in diesem Fall wahlweise auf einem hinterlegten Standardwert oder auf einen Mittelwert der zuletzt übermittelten Sollblindleistungswerte. Zur zusätzlichen Abstützung bleibt vorzugsweise der Zusatzregler 4 weiterhin aktiv.

## Patentansprüche

1. Windpark mit mindestens zwei Windenergieanlagen (1), die einen Generator (15) mit einem Umrichter (17) zur Erzeugung elektrischer Energie und eine Steuerung (2) aufweist, einem Parkmaster (8), der zur Wirk- und Blindleistungskontrolle ausgebildet ist, und ein Steuersignal für Blindleistung über ein Kommunikationsnetzwerk (7) an die Windenergieanlagen (1) übermittelt, und einem Verbindungsnetz (3), welche die Windenergieanlagen (1) miteinander verbindet zur Einspeisung der erzeugten elektrischen Energie in ein Netz (9) über eine Verknüpfungsstelle (69), wobei mindestens eine der Windenergieanlagen (1) einen Blindleistungsregler (24) aufweist, an dessen Eingang ein Blindleistungssollwert angelegt ist und der auf den Umrichter (17) zur Einstellung einer dem Blindleistungssollwert entsprechenden Blindleistung einwirkt,
wobei die Windenergieanlage (1) einen Zusatzregler (4) aufweist, an dessen Eingang vom Parkmaster (8) ein Signal für eine Sollspannung angelegt ist und der Steuersignale für den Umrichter (17) zur Veränderung der abgegebenen Blindleistung derart ausgibt, um die abgehende Spannung der Windenergieanlagen (1) auf die Sollspannung zu regeln, wobei eine Verknüpfungseinheit (5) gebildet ist, welche den Blindleistungsregler (24) und den Zusatzregler (4) derart miteinander verbindet, das ein gemeinsames Steuersignal für den Umrichter (17) gebildet ist.

2. Windpark nach Anspruch 1,
wobei die Verknüpfungseinheit (5) veränderbare Wichtungsfaktoren für den Blindleistungsregler (24) einen Zusatzregler (4) aufweist.

3. Windpark nach Anspruch 1 oder 2,
wobei die Verknüpfungseinheit (5) so gestaltet ist, dass die Blindleistung linear mit der Spannung in einem Spannungstoleranzband und nicht linear außerhalb der Grenzen des Spannungstoleranzbandes verändert wird.

4. Windpark nach einem der Ansprüche 1 bis 3,
wobei die Verknüpfungseinheit einen Vorfilter für den Blindleistungsregler (24) oder den Zusatzregler (4) umfasst, wobei der Vorfilter ein Kennlinienglied (43) aufweist.

5. Windpark nach einem der Ansprüche 1 bis 4,
wobei dem Blindleistungsregler (24) eine Notsteuerung (21) zugeschaltet ist, die beim Ausbleiben eines Steuersignals für Blindleistung vom Parkmaster (8) einen vorzugsweise eingespeicherten Ersatzwert bereitstellt.

6. Windpark nach einem der Ansprüche 1 bis 5,
wobei der Parkmaster (8) ein Umrechnungsmodul (82) umfasst, das einen Eingang für eine Parksollspannung aufweist und dessen Ausgang auf die Blindleistungskontrolle (88) einwirkt.

7. Windpark nach einem der Ansprüche 1 bis 6,
wobei ein Kompensationsmodul (80) im Parkmaster (8) vorgesehen ist, an dessen Eingang die tatsächliche Spannung angelegt ist und dessen Ausgangssignal zur Kompensation auf die Blindleistungskontrolle (88) einwirkt.

8. Verfahren zum Betreiben eines Windparks mit mindestens zwei Windenergieanlagen (1), die einen Generator (15) mit einem Umrichter (17) zur Erzeugung elektrischer Energie und eine Steuerung (2) aufweist, einem Parkmaster (8), der zur Wirk- und Blindleistungskontrolle ausgebildet ist und ein Steuersignal für Blindleistung über ein Kommunikationsnetzwerk (7) an die Windenergieanlagen (1) übermittelt, und einem Verbindungsnetz (3), welche die Windenergieanlagen (1) miteinander verbindet zur Einspeisung der erzeugten elektrischen Energie in ein Netz (9) über einen Verknüpfungspunkt (69), wobei an mindestens einer der Windenergieanlagen (1) ein Regeln der Blindleistung mittels eines Blindleistungsreglers (24) erfolgt, an dessen Eingang ein Blindleistungssollwert angelegt ist und der den Umrichter (17) zur Einstellung einer Blindleistung einwirkt,
umfassend, Anlegen eines Signals für eine Sollspannung an die mindestens eine Windenergieanlage (1) von dem Parkmaster (8) und Regeln der abgegebenen Spannung durch Verändern der von dem Umrichter (17) abgegebenen Blindleistung auf die Sollspannung mittels eines Zusatzreglers (4), und Verknüpfen des Blindleistungsreglers (24) und des Zusatzreglers (4) derart, dass ein gemeinsames Steuersignal für den Umrichter (17) gebildet wird.

9. Verfahren nach Anspruch 8,
wobei das Verknüpfen mittels veränderbarer Wichtungsfaktoren erfolgt.

10. Verfahren nach Anspruch 8 oder 9,
wobei das Verknüpfen in der Weise erfolgt, dass die Blindleistung linear mit der Spannung in einem Spannungstoleranzband und nicht linear außerhalb der Grenze des Spannungstoleranzbandes verändert wird.

11. Verfahren nach einem der Ansprüche 8 bis 10,
wobei das Verknüpfen durch ein Vorfiltern der Eingangssignale für den Zusatzregler (4) oder dem Blindleistungsregler (24) erfolgt, wobei zum Vorfiltern ein Kennlinienglied (43) verwendet wird.

12. Verfahren nach einem der Ansprüche 8 bis 11,
umfassend, Regeln der Spannung am Verknüpfungspunkt (69) des Windparks auf einen Sollwert mittels eines auf die Blindleistungskontrolle einwirkenden Spannungssteuermoduls (82) .

13. Verfahren nach einem der Ansprüche 8 bis 12,
umfassend, Erzeugen eines Vorsteuersignals der Sollspannung in Abhängigkeit von der tatsächlichen abgegebenen Spannung des Windparks zur Kompensation des Zusatzreglers.

## Claims

1. Wind farm having at least two wind energy installations (1), which has a generator (15) with a converter (17) for production of electrical power and has a controller (2), having a farm master (8) which is designed for real-power and wattless-component monitoring, and transmits a control signal for the wattless component via a communication network (7) to the wind energy installations (1), and having a connection grid system (3) which connects the wind energy installations (1) to one another in order to feed the electrical power produced into a grid system (9) via a junction point (69), wherein at least one of the wind energy installations (1) has a power-factor regulator (24) to whose input a wattless-component nominal value is applied and which acts on the converter (17) in order to set a wattless component which corresponds to the wattless-component nominal value, wherein the wind energy installation (1) has an additional regulator (4) to whose input a signal for a nominal voltage is applied by the farm master (8), and which emits control signals for the converter (17) in order to vary the emitted wattless component, in order to regulate the emitted voltage from the wind energy installations (1) at the nominal voltage, wherein a logic unit (5) is formed, which connects the power-factor regulator (24) and the additional regulator (4) to one another such that a common control signal is formed for the converter (17).

2. Wind farm according to Claim 1, wherein the logic unit (5) has variable weighting factors for the power-factor regulator (24) an additional regulator (4).

3. Wind farm according to Claim 1 or 2, wherein the logic unit (5) is designed such that the wattless component is varied linearly with the voltage in a voltage tolerance band and non-linearly outside the limits of the voltage tolerance band.

4. Wind farm according to one of Claims 1 to 3, wherein the logic unit comprises an input filter for the power-factor regulator (24) or the additional regulator (4), wherein the input filter has a characteristic element (43).

5. Wind farm according to one of Claims 1 to 4, wherein the power-factor regulator (24) is connected to an emergency controller (21) which produces a substitute value, which is preferably stored, when there is no control signal for the wattless component from the farm master (8).

6. Wind farm according to one of Claims 1 to 5, wherein the farm master (8) has a conversion module (82) which has an input for a farm nominal voltage and whose output acts on the wattless-component monitor (88) .

7. Wind farm according to one of Claims 1 to 6, wherein a compensation module (80) is provided in the farm master (8) to whose input the actual voltage is applied and whose output signal acts on the wattless-component monitor (88) for compensation.

8. Method for operation of a wind farm having at least two wind energy installations (1), which has a generator (15) with a converter (17) for production of electrical power and has a controller (2), having a farm master (8) which is designed for real-power and wattless-component monitoring, and transmits a control signal for the wattless component via a communication network (7) to the wind energy installations (1), and having a connection grid system (3) which connects the wind energy installations (1) to one another in order to feed the electrical power produced into a grid system (9) via a junction point (69), wherein the wattless component is regulated at at least one of the wind energy installations (1) by means of a power-factor regulator (24) to whose input a wattless-component nominal value is applied and which acts on the converter (17) in order to set a wattless component,
comprising
application of a signal for a nominal voltage to the at least one wind energy installation (1) by the farm master (8), and regulation of the emitted voltage by varying the wattless component emitted from the converter (17) at the nominal voltage by means of an additional regulator (4), and linking of the power-factor regulator (24) and the additional regulator (4) such that a common control signal is formed for the converter (17).

9. Method according to Claim 8, wherein the linking is carried out by means of variable weighting factors.

10. Method according to Claim 8 or 9, wherein the linking is carried out such that the wattless component is varied linearly with the voltage in a voltage tolerance band and non-linearly outside the limits of the voltage tolerance band.

11. Method according to one of Claims 8 to 10, wherein the linking is carried out by input-filtering of the input signals for the additional regulator (4) or the power-factor regulator (24), wherein a characteristic element (43) is used for input filtering.

12. Method according to one of Claims 8 to 11,
comprising
regulation of the voltage at the junction point (69) of the wind farm at a nominal value by means of a voltage control module (82) which acts on the wattless-component monitor.

13. Method according to one of Claims 8 to 12,
comprising
production of a pilot control signal for the nominal voltage as a function of the actual emitted voltage of the wind farm, for compensation of the additional regulator.

## Revendications

1. Parc éolien comprenant au moins deux aérogénérateurs (1), qui possède un générateur (15) doté d'un convertisseur statique (17) destiné à générer de l'énergie électrique et d'une commande (2), un maître de parc (8), qui est configuré pour le contrôle de la puissance active et réactive et communique aux aérogénérateurs (1) un signal de commande pour la puissance réactive par le biais d'un réseau de communication (7), et un réseau de connexion (3) qui relie ensemble les aérogénérateurs (1) en vue d'injecter l'énergie électrique générée dans un réseau (9) par le biais d'un point de combinaison (69), au moins l'un des aérogénérateurs (1) possédant un régulateur de puissance réactive (24) à l'entrée duquel est appliquée une valeur de consigne de puissance réactive et qui agit sur le convertisseur statique (17) en vue de régler une puissance réactive correspondant à la valeur de consigne de puissance réactive,
l'aérogénérateur (1) possédant un régulateur supplémentaire (4) à l'entrée duquel est appliqué par le maître de parc (8) un signal pour une tension de consigne et délivrant les signaux de commande pour le convertisseur statique (17) en vue de modifier la puissance réactive délivrée pour réguler la tension délivrée des aérogénérateurs (1) à la tension de consigne, une unité de combinaison (5) étant formée, laquelle relie le régulateur de puissance réactive (24) et le régulateur supplémentaire (4) ensemble de telle sorte qu'un signal de commande commun est formé pour le convertisseur statique (17).

2. Parc éolien selon la revendication 1, l'unité de combinaison (5) possédant des facteurs de pondération modifiables pour le régulateur de puissance réactive (24) d'un régulateur supplémentaire (4).

3. Parc éolien selon la revendication 1 ou 2, l'unité de combinaison (5) étant configurée de telle sorte que la puissance réactive est modifiée de manière linéaire avec la tension dans une bande de tolérance de tension et de manière non linéaire en-dehors des limites de la bande de tolérance de tension.

4. Parc éolien selon l'une des revendications 1 à 3, l'unité de combinaison comportant un préfiltre pour le régulateur de puissance réactive (24) ou le régulateur supplémentaire (4), le préfiltre possédant un élément à courbe caractéristique (43).

5. Parc éolien selon l'une des revendications 1 à 4, une commande de secours (21) étant connectée au régulateur de puissance réactive (24), laquelle fournit une valeur de substitution de préférence mémorisée en cas d'absence d'un signal de commande pour la puissance réactive de la part du maître de parc (8).

6. Parc éolien selon l'une des revendications 1 à 5, le maître de parc (8) comportant un module de conversion (82) qui possède une entrée pour une tension de consigne de parc et dont la sortie agit sur le contrôle de la puissance réactive (88).

7. Parc éolien selon l'une des revendications 1 à 6, un module de compensation (80) se trouvant dans le maître de parc (8), à l'entrée duquel est appliquée la tension effective et dont le signal de sortie agit sur le contrôle de la puissance réactive (88) en vue de la compensation.

8. Procédé d'exploitation d'un parc éolien comprenant au moins deux aérogénérateurs (1), qui possède un générateur (15) doté d'un convertisseur statique (17) destiné à générer de l'énergie électrique et d'une commande (2), un maître de parc (8), qui est configuré pour le contrôle de la puissance active et réactive et communique aux aérogénérateurs (1) un signal de commande pour la puissance réactive par le biais d'un réseau de communication (7), et un réseau de connexion (3) qui relie ensemble les aérogénérateurs (1) en vue d'injecter l'énergie électrique générée dans un réseau (9) par le biais d'un point de combinaison (69), une régulation de la puissance réactive s'effectuant au niveau d'au moins l'un des aérogénérateurs (1) au moyen d'un régulateur de puissance réactive (24) à l'entrée duquel est appliquée une valeur de consigne de puissance réactive et qui agit sur le convertisseur statique (17) en vue de régler une puissance réactive,
comprenant,
l'application par le maître de parc (8) à l'au moins un aérogénérateur (1) d'un signal pour une tension de consigne et la régulation de la tension délivrée par modification de la puissance réactive délivrée par le convertisseur statique (17) à la tension de consigne au moyen d'un régulateur supplémentaire (4), et la combinaison du régulateur de puissance réactive (24) et du régulateur supplémentaire (4) de telle sorte qu'un signal de commande commun est formé pour le convertisseur statique (17).

9. Procédé selon la revendication 8, la combinaison s'effectuant au moyen de facteurs de pondération modifiables.

10. Procédé selon la revendication 8 ou 9, la combinaison s'effectuant de telle sorte que la puissance réactive est modifiée de manière linéaire avec la tension dans une bande de tolérance de tension et de manière non linéaire en-dehors des limites de la bande de tolérance de tension.

11. Procédé selon l'une des revendications 8 à 10, la combinaison s'effectuant par un préfiltrage des signaux d'entrée pour le régulateur supplémentaire (4) ou le régulateur de puissance réactive (24), un élément à courbe caractéristique (43) étant utilisé pour le préfiltrage.

12. Procédé selon l'une des revendications 8 à 11, comprenant la régulation de la tension au point de combinaison (69) du parc éolien à une valeur de consigne au moyen d'un module de commande de tension (82) qui agit sur le contrôle de la puissance réactive.

13. Procédé selon l'une des revendications 8 à 12, comprenant génération d'un signal de précommande en fonction de la tension délivrée effective du parc éolien en vue de compense le régulateur supplémentaire.
